# EUROPÄISCHE PATENTSCHRIFT

(11) **EP 1 620 346 B1**
(45) Veröffentlichungstag und Bekanntmachung des Hinweises auf die Patenterteilung: **08.06.2011**
(21) Anmeldenummer: 04725005.5
(22) Anmeldetag: 01.04.2004
(51) Int. Cl.: B66F 9/07, B65G 1/04

(54) **VERFAHREN ZUR ÜBERNAHME UND/ODER ÜBERGABE UND ZUM TRANSPORT VON WAREN**
METHOD FOR THE TAKEOVER AND/OR HANDOVER AND FOR THE TRANSPORT OF GOODS
PROCEDE DE PRISE ET/OU DE REMISE DE MARCHANDISES, AINSI QUE DE TRANSPORT DE CES MARCHANDISES

(30) Priorität: 04.04.2003 DE 10315740; 27.06.2003 DE 10329133
(43) Veröffentlichungstag der Anmeldung: 01.02.2006
(73) Patentinhaber: Swisslog AG, 5033 Buchs (CH)
(72) Erfinder: BÄUMLE, Jürgen, 78713 Bad Säckingen (DE); EICHLER, Bernd, CH-6272 Eschenbach (CH); HULTSCH, Stefan, CH-5036 Oberentfelden (CH); OBSCHONKA, Frank, 72654 Neckartenzlingen (DE); REINHARD, Andreas, CH-5614 Sarmenstorf (CH)
(74) Vertreter: Weiss, Peter
(86) Internationale Anmeldenummer: PCT/EP2004/003463
(87) Internationale Veröffentlichungsnummer: WO 2004/087558

(56) Entgegenhaltungen:
- EP-A- 1 172 326
- EP-A- 1 407 983
- DE-A- 3 826 518
- US-A- 4 950 119

## Beschreibung

Die Erfindung betrifft ein Verfahren zur Übernahme und/oder Übergabe und zum Transport - insbesondere zum papierlosen Kommissionieren von Waren - die sich in einem Lager befinden, mittels eines Fahrzeuges, welches entlang von Lagergassen fährt, wobei das Fahrzeug vollautomatisch gesteuert eine vorbestimmte Picklocation anfährt und dort eine Ware übernimmt oder übergibt.

### Stand der Technik

Waren werden heute vielfach in riesigen Warenlagern zwischengespeichert. Dabei können sie auf entsprechenden Transportpaletten verbleiben oder aber auch in Lagerregale umgesetzt werden. Zwischen den Lagerregalen sind in der Regel Lagergassen gebildet, in denen der Transport der Waren erfolgt.

Zum Transport von Waren beliebiger Art sind Ladewagen bekannt, wie bspw. Gabelstapler oder Regalbediengeräte. Diese sind mit einer Ladegabel zum Unterfahren von Paletten versehen. Mittels einer Hubeinrichtung wird die Palette angehoben und an einer gewünschten Stelle abgesenkt. Dies erfordert viel Personal und denkende Tätigkeit, was dem heute gewünschten Grad an Automation von Abläufen nicht gerecht wird.

Auch das Kommissionieren, d.h., das Zusammenstellen eines Auftrages, welcher aus verschiedenen Positionen mit verschiedenen Artikeln besteht, geschieht meist auf einer Palette, die auf den Gabeln eines Gabelstaplers liegt.

Aus der DE 92 17 875 U ist bspw. ein Schleppfahrwerk für einen Ladewagen bekannt, der über eine Deichsel an einer Mitnehmerstange lösbar angekoppelt ist, wobei die Mitnehmerstange eine Verbindung mit einem selbstfahrenden Elektrofahrwerk an einer Schiene aufweist. Hierdurch wird wenigstens dieser Ladewagen ohne zusätzliches Personal an eine bestimmte, vorgegebene Stelle herangefahren.

Aus der EP 1 407 983 A1 ist eine Vorrichtung für die Übernahme und den Transport von Paletten bekannt. Zwei unmittelbar nebeneinander liegende Linien für die Übernahme, den Transport und die Lagerung von Paletten sind vorgesehen, die von im wesentlichen funktionsgleichen, nebeneinanderliegenden Vorrichtungen bedient werden, die synchron betrieben werden können.

Aus der US 4 950 119 ergibt sich ein System zum Transport, der Lagerung und dem Entnehmen von Waren im Warenhaus. Dies geschieht mit einer Hängebahn, die eine entsprechende Picklocation anfährt.

Ein Verfahren der o. g. Art ist aus der DE 38 26 518 A1 bekannt. Dort entnimmt ein Fahrtisch aus Lagerregalen einen angewählten Kasten auf elektromagnetischem Wege. legt diesen auf dem Wiegetisch ab, wobei das aktuelle Gewicht des Kasteninhalts gemessen und einer Rechnereinheit weitergemeldet wird, während gleichzeitig der angewählte Kasten zum Tresen gebracht wird, wo der bestellte Artikel entnommen werden kann, die Waage das neue Gewicht des Kastens prüft und dies an die Rechnereinheit weitermeldet.

### Aufgabe

Der vorliegenden Erfindung liegt die Aufgabe zugrunde, ein Verfahren der oben genannten Art zu entwickeln, mit dem die Übernahme und/oder Übergabe, ein papierloses Zusammenstellen eines Auftrages und der Transport von Waren in einem Lager wesentlich beschleunigt, korrekter durchgeführt und mit weniger Personal ausgeführt wird.

### Lösung der Aufgabe

Zur Lösung dieser Aufgabe führt, dass diese Übernahme oder Übergabe an der Picklocation vollautomatisch kontrolliert wird, indem am Fahrzeug das Gewicht und die Menge der übernommenen oder übergebenen Ware ermittelt und mit einem Sollwert verglichen wird.

Das bedeutet, dass das Fahrzeug von einer Zentrale direkt oder durch manuelle Eingabe indirekt einen bestimmten Auftrag erhält, um Waren bspw. entsprechend einem Kommissionierauftrag zu übernehmen oder Waren an bestimmten Stellen abzuliefern. Dies kann durch einen Kommissionierer erfolgen, dem Fahrzeug könnte aber auch eine Robotereinrichtung zugeordnet werden, welche die Übernahme bzw. Übergabe durchführt.

Wichtig ist die Kontrolle der Übernahme oder Übergabe. Die Kontrolle geschieht über das Gewicht der Ware, wobei die Gewichtsdifferenz vor bzw. nach der Übergabe bzw. Übernahme der Ware ermittelt wird. Diese Differenz wird mit einem Sollwert verglichen. Stimmt die Differenz mit diesem Sollwert innerhalb eines bestimmten Rahmens überein, kann die Übernahme bzw. Übergabe bestätigt werden. Ähnliches gilt auch für die Kontrolle der Menge der übernommenen bzw. der übergebenen Ware.

In einem bevorzugten Ausführungsbeispiel soll die Picklocation durch das Fahrzeug kenntlich gemacht werden. Der Einfachheit halber geschieht die Kenntlichmachung durch ein Anleuchten vom Fahrzeug aus, so dass der Kommissionierer sofort weiss, welche Ware er zu übernehmen bzw. wohin er die Ware zu übergeben hat. Die Anzahl, die Bezeichnung und weitere Details von dem Produkt werden auf dep Display des auf dem Fahrzeug mitgeführten Terminals dargestellt. Diese Funktion kann auch durch eine Fachanzeige im Regal übernommen werden.

Günstigerweise bietet das Fahrzeug eine Übernahme- oder Übergabeebene für die Ware an, welche in der Höhe verstellbar ist. Hier soll vor allem einer günstigen Arbeitsergonomie Rechnung getragen werden, so dass die Übergabe bzw. Übernahme, wenn möglich, auf gleicher Höhe erfolgen. Dabei ist vorgesehen, dass das Fahrzeug eine Einrichtung aufweist, mittels der die Höhe des Ortes ermittelt wird, auf der sich die Ware befindet.

Obwohl alle möglichen Fahrzeuge zur Durchführung des erfindunsgemässen Verfahrens geeignet erscheinen, können vor allem mit Hilfe einer Elektrohängebahn viele der gestellten Aufgaben erfüllt werden. Entlang der Lagergasse führt eine Schiene, entlang der Fahrzeuge einer Elektrohängebahn fahren können. Auf den Fahrzeugen der Elektrohängebahn befinden sich bspw. eine Wägeeinrichtung und insbesondere ein Terminal zur Kontrolle der Ergebnisse und zur Darstellung der Vorgabe für die Übernahme bzw. Übergabe der Ware.

Die Elektrohängebahn hat den Vorteil, dass durch die schienengebundene Fahrt Beschädigungen an Lagergut und Gebäude ausgeschlossen sind. Durch das Prinzip der Elektrohängebahn benötigt das Fahrzeug keinen Fahrer. Dieser kann sich somit ausschliesslich auf das Kommissionieren konzentrieren und muss das Fahrzeug auch nicht auf dem Fahrweg begleiten, wie es bei herkömmlichen Fahrer-Systemen der Fall ist, sondern kann in einer frei wählbaren Zone alle anfallenden Pickaufträge abarbeiten. Dies macht er dadurch, dass der zwischen zwei oder mehreren Fahrzeugen pendelt oder mit einem oder mehreren Fahrzeugen mitgeht. Dadurch wird der Wegeanteil des Kommissionierers im Vergleich zu herkömmlichen Verfahren erheblich reduziert und die Pickleistung entsprechend gesteigert.

Selbstverständlich kann vorgesehen sein, dass im Lager mehrere Fahrzeuge einer Elektrohängebahn unterwegs sind, die gleichzeitig einen Auftrag erhalten, so dass auch mehrere Aufträge gleichzeitig abgearbeitet werden können. Alle Aufträge werden dann am Ende wieder zu einem Bestellauftrag zusammengeführt. Die Kommissionierleistung selbst kann natürlich durch zusätzliche Kommissionierer gesteigert werden.

Bevorzugt werden über eine zentrale Steuerung alle Fahrbewegungen gesteuert und überwacht, wobei jedoch auch jedes Fahrzeug individuell gesteuert werden kann. Die Fahrzeugsteuerung kann entsprechend der Beladung durchgeführt werden, wobei die Beschleunigung und die Geschwindigkeit in Kurven und auf Geraden dieser Beladung angepasst sind, um den Transport so schonend wie möglich zu gestalten.

Aufgrund des mitgeführten Terminals, der bevorzugt direkt mit der Lagerverwaltung verbunden ist, ist eine papierlose, gute Realisierung und Kontrolle aller Kommissionieraufträge möglich.

Als Zusatzfunktionen kann das Fahrzeug der Elektrohängebahn noch anfallende Leerpaletten, anfallende Palettenverpackungen und den Kommissionierer mitnehmen. Ausserdem kann eine automatische Prüfung der Palettenabmessungen erfolgen.

Zur Sicherheit der Kommissionierer und anderer Personen in diesem Bereich werden die Fahrzeuge mit einer mechanischen, optischen, elektrischen oder elektronischen Schutzeinrichtung ausgestattet. Dieses Schutzsystem überwacht selbstständig den Fahrweg und sichert ihn ab. Dabei sollen Personen oder Objekte erkannt und das Fahrzeug selbstständig zum Stillstand gebracht werden. Die Abmessungen von Schutzsystem und Schutzfeld werden durch die Fahrzeugbreite, den Seitenversatz bei Kurvenfahrt, die Geschwindigkeit, den Anhalteweg und die Ansprechzeit bestimmt.

Mit dem erfindungsgemässen Verfahren kann ein vollautomatisches Be- und Entladen von Paletten stattfinden. Die Elektrohängebahn gewährleistet einen schonenden Transport der Paletten, auch von ungesicherten Paletten, wobei hervorzuheben ist, dass die Paletten, einmal beladen, bis zum Abladen nie mehr umgesetzt werden.

Ein wesentlicher Vorteil liegt in der Reduzierung der Kommissionierfehler dadurch, dass das Fahrzeug exakt zur Picklocation fährt, die Picklocation anleuchtet oder eine Fachanzeige aktiviert, die Anzahl der zu pickenden Artikel anzeigt und durch eine Wägung überprüft. Durch das einstufige Kommissionieren, d.h., von der Lagereinheit direkt auf die Versandeinheit wird der Kommissionierablauf wesentlich vereinfacht.

Eine Kommunikation zwischen Kommissionierer und Lagerverwaltung ist ständig über das mitfahrende Terminal gewährleistet.

Das Verfahren gewährleistet eine sichere Funktion, leichte und betriebssichere Bedienbarkeit, gute Zugänglichkeit und Austauschbarkeit bei Wartung und Instandhaltung und einen geräuscharmen Förderbetrieb.

### Figurenbeschreibung

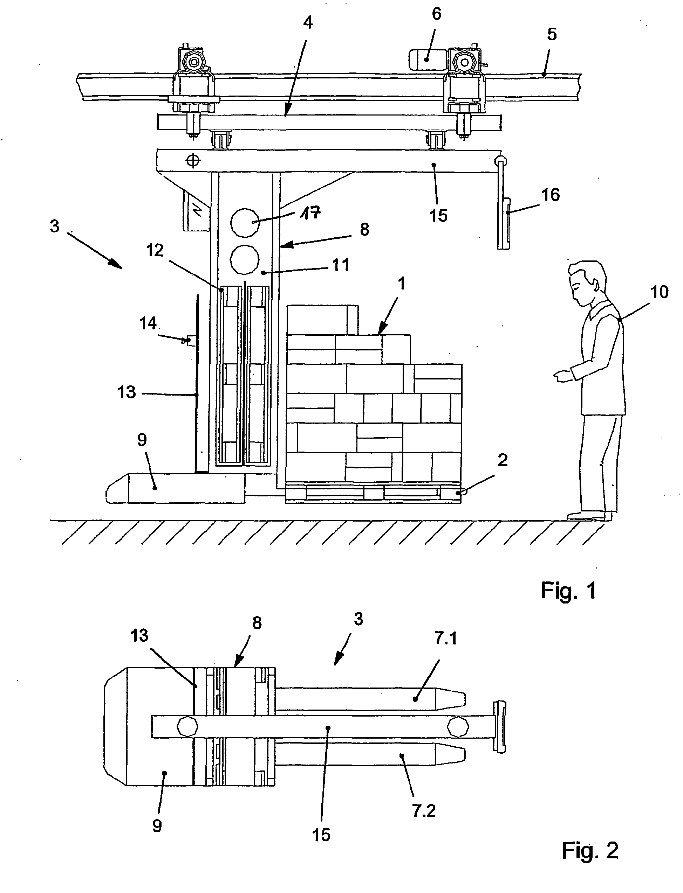

Weitere Vorteile, Merkmale und Einzelheiten der Erfindung ergeben sich aus der nachfolgenden Beschreibung bevorzugter Ausführungsbeispiele sowie anhand der Zeichnung; diese zeigt
Figur 1 eine schematisch dargestellte Seitenansicht eines Systems für ein erfindungsgemässes Verfahren zur Übernahme und/oder Übergabe und zum Transport von Waren in Gebrauchslage;
Figur 2 eine Draufsicht auf ein Fahrzeug zur Übernahme und/oder Übergabe und zum Transport von Waren.

Kernstück eines Systems zur Übernahme und/oder Übergabe und zum Transport von Waren 1, welche sich auf einer Palette 2 befinden, ist ein Fahrzeug 3 einer Elektrohängebahn (EHB-Fahrzeug) mit einem Lastaufnahmemittel. Dieses Fahrzeug 3 bewegt sich an einer Schiene 5 und ist mit einem Antrieb ausgestattet. Die Schiene 5 führt entlang von nicht näher dargestellten Lagergassen in einem Lager.

Derartige Elektrohängebahnen sind bekannt und handelsüblich, weshalb auf eine nähere Beschreibung verzichtet wird. Beispielsweise ist in der DE 92 17 875 ein Schleppfahrwerk gezeigt, welches aus einem Ladewagen besteht, der über seine Deichsel an einer Mitnehmerstange lösbar angekoppelt ist, wobei die Mitnehmerstange eine Verbindung mit einem selbstfahrenden Elektrofahrwerk an einer Schiene aufweist.

Das Lastaufnahmemittel des Fahrzeuges 3 besitzt zwei Gabeln 7.1 und 7.2, welche in entsprechende Ausnehmungen der Palette 2 eingefahren werden können. Mit diesen Gabeln 7.1 und 7.2 kann die Palette 2 angehoben werden. Hierzu sind die Gabeln 7.1 und 7.2 an einer Fahrzeugsäule 8 angeordnet, entlang der sie höhenverstellbar sind. Alternativ können die Gabeln 7.1, 7.2 durch Fördereinheiten (Rollen-, Ketten- oder Gurttechnik) oder durch eine Plattform ersetzt werden.

An der Fahrzeugsäule 8 befindet sich auch eine Trittfläche 9, auf der bspw. ein Kommissionierer 10 mitfahren kann.

Ferner sind an der Säule 8 entsprechende Fächer 11 zur Aufnahme von bspw. Leerpaletten 12 vorgesehen.

Der Trittfläche 9 ist ferner eine Halterung 13 für einen Nothaltschalter 14 zugeordnet.

Die Fahrzeugsäule 8 hängt an einem Querträger 15, über den das Fahrzeug 3 mit dem Schlitten 4 verbunden ist. Stirnwärtig befindet sich an dem Querträger 15 ein Terminal 16 mit einem entsprechenden Display und ein Gabelelement.

In der Fahrzeugsäule können auch Behälter 17 für zu entsorgenden Abfall (z.B. Verpackung) angebracht sein.

Die Funktionsweise der vorliegenden Erfindung ist folgende:

Beispielsweise soll das System zum Kommissionieren von Waren dienen. Hierzu wird dem Fahrzeug 3 ein entsprechender Auftrag mitgegeben, wobei dies direkt von einer Zentrale aus oder bspw. auch durch Eingabe in das Terminal 16 geschehen kann.

Dieser Kommissionierauftrag kann nun nach verschiedensten Gesichtspunkten von einem Programm in dem Terminal 16 oder auch von der Zentrale eingeteilt werden, wobei die Reihenfolge der zu übernehmenden Waren gemäss ihrer Position im Kommissionierbereich festgelegt wird.

Sobald das Fahrzeug den Auftrag erhalten hat, fährt sie an die erste Position und kann nun mit dem eigentlichen Kommissionieren beginnen. Bevorzugt wird die Ware von dem Fahrzeug aus selbst kenntlich gemacht, was bspw. durch Anleuchten geschehen kann. Der Kommissionierer 10 kann nun die Ware aus dem Lager entnehmen und auf die Palette 2 setzen. Dabei zeigt ihm das Terminal 16 die Anzahl der Artikel der Ware an. Zur Kontrolle können auch noch Name, Artikelnummer, Warencode und andere wesentliche Merkmale auf dem Terminal 16 angezeigt werden.

Als Identifizierung bzw. Kontrolle des Pickauftrages kann auch ein Scanner eingesetzt werden.

Nachdem der Kommissionierer den Pickauftrag ausgeführt hat, kann zur Kontrolle eine Wägung der Palette 2 inklusive der Ware 1 (auf Differenzmessung) stattfinden.

Der Pickauftrag ist beendigt, wenn der Kommissionierer 10 und/oder das Terminal die Wägung als in Ordnung befindet und dies bestätigt. Das Fahrzeug fährt nach Bestätigung automatisch die nächste Picklocation des Auftrags an. Änderungen am Pickauftrag (Fehlmengen, Anbruch usw.) können am Terminal 16 selbst eingeben werden.

### Positionszahlenliste

| | | | | | |
|---|---|---|---|---|---|
| 1 | Ware | 34 | | 67 | |
| 2 | Palette | 35 | | 68 | |
| 3 | Fahrzeug | 36 | | 69 | |
| 4 | Schlitten | 37 | | 70 | |
| 5 | Schiene | 38 | | 71 | |
| 6 | Antrieb | 39 | | 72 | |
| 7 | Gabel | 40 | | 73 | |
| 8 | Fahrzeugsäule | 41 | | 74 | |
| 9 | Trittfläche | 42 | | 75 | |
| 10 | Kommissionierer | 43 | | 76 | |
| 11 | Fach | 44 | | 77 | |
| 12 | Leerpalette | 45 | | 78 | |
| 13 | Halterung | 46 | | 79 | |
| 14 | Nothaltschalter | 47 | | | |
| 15 | Querträger | 48 | | | |
| 16 | Terminal | 49 | | | |
| 17 | Behälter | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Übernahme und/oder Übergabe und zum Transport - insbesondere zum papierlosen Kommissionieren - von Waren (1), die sich in einem Lager befinden, mittels eines Fahrzeuges (3), welches entlang von Lagergassen fährt, wobei das Fahrzeug (3) vollautomatisch gesteuert eine vorbestimmte Picklocation anfährt und dort eine Ware (1) übernimmt oder übergibt,
**dadurch gekennzeichnet, dass**
diese Übernahme oder Übergabe an der Picklocation vollautomatisch kontrolliert wird, indem am Fahrzeug (3) das Gewicht und die Mengeder übernommenen oder übergebenen Ware (1) ermittelt und mit einem Sollwert verglichen wird.

2. Verfahren nach Anspruch 1, **dadurch gekennzeichnet, dass** die Picklocation durch das Fahrzeug (3) kenntlich gemacht wird.

3. Verfahren nach Anspruch 2, **dadurch gekennzeichnet, dass** die Picklocation angeleuchtet wird.

4. Verfahren nach einem der Ansprüche 1 bis 3, **dadurch gekennzeichnet, dass** eine Übernahme- oder Übergabeebene (7.1, 7.2) für die Ware (1) in ihrer Höhe automatisch entsprechend einer vom Fahrzeug (3) zu ermittelnden Lagerhöhe verstellt wird.

5. Verfahren nach wenigstens einem der Ansprüche 1 bis 4, **dadurch gekennzeichnet, dass** das Fahrzeug (3) leere Auflagen oder Behältnisse für die Waren, Abfall, Palettensicherungen od. dgl. mitnimmt und/oder auch eine Mitfahrgelegenheit für den Kommissionierer (10) bietet.

6. Verfahren nach wenigstens einem der Ansprüche 1 bis 5, **dadurch gekennzeichnet, dass** in den Lagergassen eine Elektrohängebahn (3) zumindest teilweise mittels einer Schienenführung (5) geführt wird.

7. Verfahren nach Anspruch 6, **dadurch gekennzeichnet, dass** die Wiegeergebnisse mittels einer Wägeeinrichtung und eines Terminals (16) die der Elektrohängebahn (3) zugeordnet ist, kontrolliert werden.

8. Verfahren nach Anspruch 6 oder 7, **dadurch gekennzeichnet, dass** die Elektrohängebahnen (3) die Waren (1) in einer Übernahme- bzw. Übergabeebene (7.1, 7.2) übernehmen bzw. übergeben.

9. Verfahren nach Anspruch 8, **dadurch gekennzeichnet, dass** die Waren (1) mittels zweier Gabeln (7.1, 7.2), Fördertechnik oder einer Plattform übernommen bzw. übergeben werden.

10. Verfahren nach Anspruch 8 oder 9, **dadurch gekennzeichnet, dass** die Übernahme- bzw. Übergabeebene in der Höhe verstell werden können.

11. Verfahren nach wenigstens einem der Ansprüche 6 bis 10, **dadurch gekennzeichnet, dass** ein Kommissionierer (10) auf einer Mitfahrebene (9) des Fahrzeugs (3) mitfährt.

12. Verfahren nach wenigstens einem der Ansprüche 6 bis 11, **dadurch gekennzeichnet, dass** die zu entnehmenden Ware (1) mittels eines Kennzeichnungsmittels des Fahrzeuges (3) bspw. einer Lampe kenntlich gemacht wird oder eine Fachanzeige aktiviert wird.

13. Verfahren nach wenigstens einem der Ansprüche 6 bis 12, **dadurch gekennzeichnet, dass** das Fahrzeug (3) mittels einer Schutzeinrichtung überwacht und abgesichert wird.

## Claims

1. A method for the taking and/or giving over and for the transporting - in particular for the paperless order picking - of goods (1), located in a warehouse, by means of a vehicle (3) which travels along storage aisles, wherein the vehicle (3) approaches a predetermined pick location in a manner controlled fully automatically and there takes or gives over an article (1), **characterised in that** this taking or giving over at the pick location is checked in a fully automatic manner by the weight and quantity of the taken or given-over article (1) being ascertained and compared with a desired value at the vehicle (1).

2. A method according to claim 1, **characterised in that** the pick location is indicated clearly by the vehicle (3).

3. A method according to claim 2, **characterised in that** the pick location is illuminated.

4. A method according to any one of claims 1 to 3, **characterised in that** a taking or handing over plane (7.1, 7.2) for the article (1) is vertically adjusted in an automatic manner according to a storage height to be ascertained by the vehicle (3).

5. A method according to at least one of claims 1 to 4, **characterised in that** the vehicle (3) carries empty supports or containers for the goods, waste, pallet securing means or the like and/or also offers a possibility for the order picker (10) to ride thereon.

6. A method according to at least one of claims 1 to 5, **characterised in that** in the storage aisles, an electric overhead conveyor (3) is at least partially guided by means of a rail guide (5).

7. A method according to claim 6, **characterised in that** the weighing results are checked by means of a weighing device and a terminal (16) which is associated with the electric overhead conveyor (3).

8. A method according to claim 6 or 7, **characterised in that** the electric overhead conveyors (3) take or alternatively hand over the goods (1) in a taking or handing over plane (7.1, 7.2).

9. A method according to claim 8, **characterised in that** the goods (1) are taken or alternatively handed over by means of two forks (7.1, 7.2), conveyance or a platform.

10. A method according to claim 8 or 9, **characterised in that** the taking or handing over plane can be adjusted vertically.

11. A method according to at least one of claims 6 to 10, **characterised in that** an order picker (10) rides on a riding plane (9) of the vehicle (3).

12. A method according to at least one of claims 6 to 11, **characterised in that** the article (1) to be removed is indicated clearly by means of an identification means of the vehicle (3), for example a light, or a shelf display is activated.

13. A method according to at least one of claims 6 to 12, **characterised in that** the vehicle (3) is monitored and safeguarded by means of a safety device.

## Revendications

1. Procédé de prise et/ ou de remise et de transport - en particulier de préparation de commandes sans papier - de marchandises (1) qui se trouvent dans un dépôt, au moyen d'un véhicule (3) qui se déplace le long d'allées du dépôt, le véhicule (3) accédant, commandé de manière entièrement automatique, à un emplacement de prise prédéterminé et y prenant ou remettant une marchandise (1),
**caractérisé par le fait que**
cette prise ou remise à l'emplacement de prise est contrôlée de manière entièrement automatique en déterminant au véhicule (3) le poids et la quantité de la marchandise prise ou remise (1) et en les comparant avec une valeur de consigne.

2. Procédé selon la revendication 1, **caractérisé par le fait que** l'emplacement de prise est rendu reconnaissable par le véhicule (3).

3. Procédé selon la revendication 2, **caractérisé par le fait que** l'emplacement de prise est éclairé.

4. Procédé selon l'une des revendications 1 à 3, **caractérisé par le fait qu'**un plan de prise ou de remise (7.1, 7.2) de la marchandise (1) est automatiquement réglé en hauteur selon une hauteur de dépôt à déterminer par le véhicule (3).

5. Procédé selon au moins l'une des revendications 1 à 4, **caractérisé par le fait que** le véhicule (3) emporte également les supports ou récipients vides des marchandises, les déchets, les protections de palettes ou autres et/ou offre également une possibilité d'accompagnement de la personne chargée de la préparation des commandes (10).

6. Procédé selon au moins l'une des revendications 1 à 5, **caractérisé par le fait que** dans les allées du dépôt est guidé un convoyeur aérien électrique (3) au moins partiellement au moyen d'un guidage par rail (5).

7. Procédé selon la revendication 6, **caractérisé par le fait que** les résultats de pesage sont contrôlés au moyen d'un dispositif de pesage et d'un terminal (16) associé au convoyeur aérien électrique (3).

8. Procédé selon la revendication 6 ou 7, **caractérisé par le fait que** les convoyeurs aériens électriques (3) prennent ou remettent les marchandises (1) dans un plan de prise ou de remise (7.1, 7.2).

9. Procédé selon la revendication 8, **caractérisé par le fait que** les marchandises (1) sont prises ou remises au moyen de deux fourches (7.1, 7.2), d'une technique de transport ou d'une plateforme.

10. Procédé selon la revendication 8 ou 9, **caractérisé par le fait que** le plan de prise ou le plan de remise peuvent être réglés en hauteur.

11. Procédé selon au moins l'une des revendications 6 à 10, **caractérisé par le fait qu'**une personne chargée de la préparation des commandes (10) accompagne sur un plan d'accompagnateur (9) du véhicule (3).

12. Procédé selon au moins l'une des revendications 6 à 11, **caractérisé par le fait que** la marchandise (1) à prendre est rendue reconnaissable à l'aide d'un moyen d'identification du véhicule (3), par exemple une lampe, ou qu'une indication de casier est activée.

13. Procédé selon au moins l'une des revendications 6 à 12, **caractérisé par le fait que** le véhicule (3) est surveillé et protégé au moyen d'un dispositif de protection.
